# EUROPÄISCHE PATENTSCHRIFT

(11) **EP 3 348 501 B1**
(45) Veröffentlichungstag und Bekanntmachung des Hinweises auf die Patenterteilung: **09.03.2022**
(21) Anmeldenummer: 18150660.1
(22) Anmeldetag: 08.01.2018
(51) Int. Cl.: B65G 47/90, A22C 17/00, B65B 35/36, B65B 35/40, B65B 35/50

(54) **PRODUKTGREIFER**
PRODUCT GRIPPER
DISPOSITIF DE PRÉHENSION DE PRODUIT

(30) Priorität: 13.01.2017 DE 102017100620
(43) Veröffentlichungstag der Anmeldung: 18.07.2018
(73) Patentinhaber: Weber Maschinenbau GmbH Breidenbach, 35236 Breidenbach (DE)
(72) Erfinder: Horst, Theodor, 35287 Amöneburg (DE)
(74) Vertreter: Manitz Finsterwald Patent- und Rechtsanwaltspartnerschaft mbB

(56) Entgegenhaltungen:
- EP-A1- 0 634 325
- EP-A1- 2 878 556
- EP-A1- 3 034 250
- EP-A1- 3 069 836
- DE-A1- 3 642 123
- DE-A1-102009 012 332
- DE-A1-102015 003 633
- DE-T2-602004 008 323
- US-B2- 9 487 316

## Beschreibung

Die vorliegende Erfindung betrifft einen Produktgreifer, insbesondere zum Ergreifen von Lebensmittelprodukten.

Derartige Greifer werden beispielsweise in Verbindung mit Delta-Robotern eingesetzt, um Produkte von einer Unterlage aufzunehmen (zum Beispiel von einem Transportband) und in einer Verpackung zu platzieren. Typische Greifer weisen symmetrisch aufgebaute Schaufeln auf, die von den Seiten des Produkts kommend dieses untergreifen, sodass es angehoben und anschließend an seinen Bestimmungsort, oftmals eine Verpackungsmulde, verbracht werden kann.

Insbesondere in der Lebensmittelindustrie ist es oftmals gewünscht, Teilportionen eines Lebensmittelprodukts in einer Verpackung überlappend anzuordnen. Eine solche Überlappung der Teilportionen zu einer Gesamtportion erfolgt bisher mit Hilfe von geeignet ausgebildeten Förderstrecken. Beispielsweise wird eine Teilportion aus einem Portionsstrom heraus- und in eine höher liegende Ebene geleitet. Diese Teilportion wird anschließend seitlich versetzt geführt und einer auf einer tiefer liegenden Förderebene geförderten Teilportion überlappend zugeführt.

Eine Teilportion besteht aus zumindest einem Objekt, beispielsweise eine Lebensmittelscheibe als Portion. Umfasst sind alle Portionsformen und -dicken.

Alternativ wird herkömmlicherweise ein Produkt mit überlappenden Teilportionen durch Operationen von Robotern realisiert, wobei ein Robotergreifer eine auf einem Zuführband liegende erste Teilportion erfasst und in einer Verpackung oder auf einem Abführband ablegt. In einem sich daran anschließenden Arbeitsschritt wird eine zweite Teilportion vom Greifer erfasst und mit der gewünschten Überlappung auf der ersten Teilportion abgelegt. Die Anordnung der Teilportionen zur Bildung des fertigen Produkts erfolgt somit entweder durch zwei Greifer oder durch mehrere Greif- und Verfahr-Vorgänge eines einzelnen Greifers. Eine überlappende Anordnung von zwei Teilportionen ist daher mit einem nicht unerheblichen anlagentechnischen Aufwand verbunden und/oder wirkt sich nachteilig auf die Durchsatzleistung der Anlage aus.

Produktgreifer zur Aufnahme von Lebensmittelportionen der vorstehend beschriebenen Art sind aus der DE 10 2009 012 332 A1 und der DE 10 2015 003 633 A1 bekannt. Diese Druckschriften offenbaren nämlich einen Produktgreifer gemäß dem Oberbegriff des Anspruchs 1.

Es ist eine Aufgabe der vorliegenden Erfindung, eine Vorrichtung zu schaffen bzw. ein Verfahren bereitzustellen, mit der/dem sich auf einfache Weise eine überlappende Anordnung von Teilportionen eines Produkts erreichen lässt.

Die Lösung dieser Aufgabe erfolgt durch eine Vorrichtung bzw. ein Verfahren mit den Merkmalen der unabhängigen Ansprüche.

Erfindungsgemäß umfasst der Produktgreifer zur Aufnahme eines zumindest eine erste Teilportion und eine zweite Teilportion umfassenden Produkts zumindest einen ersten Aufnehmer mit einer ersten Aufnahmefläche zur Aufnahme der ersten Teilportion und zumindest einen zweiten Aufnehmer mit einer zweiten Aufnahmefläche zur Aufnahme der zweiten Teilportion. Ferner ist ein Antriebsmittel vorgesehen, um die Aufnehmer zwischen einer ersten Position, in welcher die erste Aufnahmefläche und die zweite Aufnahmefläche auf gegenüber liegenden Seiten des aufzunehmenden Produkts angeordnet sind, und einer zweiten Position zu bewegen, in welcher sich die Aufnahmeflächen zumindest teilweise unter den Teilportionen befinden. Der erste Aufnehmer ist derart ausgestaltet, dass die erste Aufnahmefläche mit der ersten Teilportion im Wesentlichen senkrecht relativ zu der zweiten Aufnahmefläche bewegbar, insbesondere anhebbar und/oder absenkbar ist. Die Bewegung muss keine rein vertikale Bewegung sein. Entscheidend ist, dass sie eine Bewegungskomponente enthält, die im Wesentlichen senkrecht zu der zweiten Aufnahmefläche gerichtet ist. Auch eine Bewegbarkeit, insbesondere gegensinnige Bewegbarkeit der ersten und der zweiten Aufnahmefläche ist denkbar.

Alternativ oder zusätzlich ist die erste Aufnahmefläche in dieser Richtung versetzt zu der zweiten Aufnahmefläche angeordnet.

Dadurch, dass die beiden Aufnahmeflächen in unterschiedlichen Ebenen angeordnet oder bringbar sind, kann die auf der weiter unten liegenden Aufnahmefläche angeordnete Teilportion abschnittsweise unter die auf der weiter oben liegenden Aufnahmefläche angeordnete Teilportion geschoben werden, und umgekehrt. Dies lässt sich in einem einzigen Arbeitsschritt erreichen, nämlich mit der Schließbewegung der Aufnehmer. Die Aufnehmer sind vor dieser Bewegung vorzugsweise seitlich außerhalb eines Bereichs angeordnet, in dem die Teilportionen liegen. Bei der Schließbewegung werden die Aufnehmer dann seitwärts aufeinander zu bewegt.

Mit anderen Worten wird durch das Ergreifen der zwischen den beiden Aufnehmern liegenden Teilportionen gleichzeitig deren zumindest abschnittsweise Überlappung erzeugt. Die überlappend angeordneten Teilportionen können anschließend an dem gewünschten Ort abgelegt werden.

Verglichen mit herkömmlichen Konzepten erlaubt es die erfindungsgemäße Vorrichtung, Greifeinrichtungen und/oder Verfahrensschritte einzusparen, was mit nicht unerheblichen Kostenvorteilen und/oder einer Verbesserung der Durchsatzleistung einhergeht.

Weitere Ausführungsformen der Erfindung sind in der Beschreibung, den Ansprüchen sowie den Zeichnungen angegeben.

Gemäß einer vorteilhaften Ausführungsform entspricht ein Versatz zwischen der ersten und der zweiten Aufnahmefläche zumindest einer Höhe oder Dicke der zweiten Teilportion. Dadurch wird ein leichteres "Unterfahren" bzw. "Überfahren" der jeweils anderen Teilportionen gewährleistet.

Gemäß einer ersten Variante der vorliegenden Erfindung sind die die Aufnahmeflächen aufweisenden Abschnitte der Aufnehmer unterschiedlich dick ausgeführt. Die entsprechenden Aufnahmeflächen liegen dann - bezogen auf ein gemeinsames Bezugsniveau, beispielsweise eine Unterkante der Aufnehmer - auf unterschiedlichen Niveaus, so dass eine Überlappung der Teilportionen problemlos durch ein "Zusammenschieben" der Teilportionen erreicht werden kann.

Ganz allgemein gilt, dass die Aufnehmer bzw. Aufnehmerflächen unterschiedlich breit und/oder lang ausgestaltet sein können.

Gemäß einer zweiten Variante der Erfindung ist das Antriebsmittel derart ausgestaltet, dass die erste Aufnahmefläche in einer Richtung im Wesentlichen senkrecht zu der ersten Aufnahmefläche um eine Strecke bewegbar ist, insbesondere wobei die Strecke zumindest einer Höhe oder Dicke der zweiten Teilportion entspricht.

Um die Aufnahme der Teilportionen zu erleichtern, können die Aufnehmer an ihrem in der ersten Position der entsprechenden Teilportion zugewandten Rand keilförmig ausgebildet sein, wobei der Rand in die jeweilige Aufnahmefläche übergeht.

Eine konstruktiv einfache Bauweise sieht vor, dass die Aufnehmer kamm- oder rechenartig ausgebildet sind, insbesondere wobei Aussparungen und Vorsprünge der beiden Aufnehmer komplementär oder versetzt zueinander angeordnet sind. Dadurch können die Aufnehmer zumindest abschnittsweise ineinandergreifend zusammen gefahren werden, um die auf verschiedenen Niveaus angeordneten oder gebrachten Teilportionen in eine zumindest teilweise überlappende Anordnung zu bringen. Die Aufnahmeflächen sind bei dieser Bauweise an der Oberseite der Vorsprünge des jeweiligen Aufnehmers angeordnet. Die Vorsprünge können zinken- oder fingerartig ausgebildet sein. Alternativ oder ergänzend können sowohl die zu einer Portion gerichteten Vorderkanten der Vorsprünge als auch die Aufnahmeflächen selbst eine Wellenkontour bzw. eine (leichte) Balligkeit aufweisen. Je nach Produktart wird damit die Kontaktfläche zwischen Aufnehmer und Produkt verringert.

Gemäß einer weiteren Ausführungsform weisen der erste und/oder der zweite Aufnehmer einen Seitenanschlag auf, durch den eine Bewegung der entsprechenden Teilportion relativ zu der Aufnahmefläche begrenzbar und/oder erzeugbar ist, insbesondere wobei der Seitenanschlag und die jeweilige Aufnahmefläche relativ zueinander bewegbar sind. Beispielsweise kann der Seitenanschlag festlegen, wie weit die entsprechende Teilportion auf die ihm zugeordnete Aufnahmefläche aufgeschoben werden kann. Bei einer Bauform, die eine Relativbewegung zwischen den Seitenanschlägen und dem entsprechenden Aufnehmer zulässt, kann vorgesehen sein, den Seitenanschlag bei der Ablage des Produkts festzuhalten und den Aufnehmer seitlich weg zu ziehen, so dass das Produkt abgelegt werden kann ohne seitlich zu verrutschen.

Eine weitere Maßnahme, um die Aufnahme, Sicherung und/oder Ablage der Teilportionen bzw. des Produkts noch zuverlässiger gestalten zu können, besteht darin, einen Niederhalter vorzusehen, mit dem die Teilportionen separat voneinander und/oder gemeinsam mit einer Kraft beaufschlagbar sind, um diese gegen eine Unterlage und/oder gegen die jeweilige Aufnahmefläche zu drücken. Der Niederhalter kann einen dem ersten Aufnehmer zugeordneten Niederhalterabschnitt und/oder einen dem zweiten Aufnehmer zugeordneten zweiten Niederhalterabschnitt umfassen, insbesondere wobei die beiden Niederhalterabschnitte separat voneinander bewegbar oder sogar konstruktiv und/oder räumlich voneinander getrennt sind. Der Niederhalter (oder die Niederhalterabschnitte) können derart ausgestaltet sein, dass die Teilportionen zeitlich variabel und/oder lokal mit einer Kraft beaufschlagbar sind. Der Niederhalter bzw. die Niederhalterabschnitte gestatten eine lagefixierende Kraftbeaufschlagung der Teilportionen(en) in Abhängigkeit der jeweiligen Prozesssituation/Phase des Aufnahme- und Transportprozesses.

Eine Erleichterung der Aufnahme der Teilportionen wird durch einen optional vorgesehenen zentralen Anschlag bewirkt, der zumindest in der ersten Position der Aufnehmer zwischen den beiden Teilportionen anordbar ist. Dadurch können die Teilportionen bei der Aufnahmebewegung nicht unbegrenzt seitlich verschoben oder gegen die andere Teilportion gedrückt werden, sondern stützen sich an dem zentralen Anschlag ab. Wenn dieser bewegbar ausgestaltet ist, kann er nach dem Abschluss der Aufnahmebewegung wegbewegt werden, um die Erzeugung der Überlappung der Teilportionen zuzulassen.

Die Erfindung betrifft ferner ein Verfahren zur Aufnahme eines zumindest eine erste Teilportion und eine zweite Teilportion umfassenden Produkts mittels eines Produktgreifers, insbesondere gemäß zumindest einem der vorstehend beschriebenen Ausführungsformen. Der Produktgreifer umfasst zumindest einen ersten Aufnehmer mit einer ersten Aufnahmefläche zur Aufnahme der ersten Teilportion und zumindest einen zweiten Aufnehmer mit einer zweiten Aufnahmefläche zur Aufnahme der zweiten Teilportion. Das Verfahren umfasst die Schritte:
- Bewegung des ersten Aufnehmers zur Aufnahme der ersten Teilportion aus einer Grundposition, in welcher die erste Aufnahmefläche seitlich versetzt zu der aufzunehmenden ersten Teilportion angeordnet ist, in eine zweite Position, in welcher sich die erste Aufnahmefläche zumindest teilweise unter der ersten Teilportion befindet, und
- Bewegung des zweiten Aufnehmers zur Aufnahme der zweiten Teilportion aus einer Grundposition, in welcher die zweite Aufnahmefläche seitlich versetzt zu der aufzunehmenden zweiten Teilportion angeordnet ist, in eine zweite Position, in welcher sich die zweite Aufnahmefläche zumindest teilweise unter der zweiten Teilportion befindet.

Diese beiden Schritte zur Aufnahme der Teilportionen können grundsätzlich gleichzeitig, zeitlich versetzt oder nacheinander durchgeführt werden. Nach der Aufnahme der jeweiligen Teilportion wird die Bewegung des ersten und/oder des zweiten Aufnehmers bei mit im Wesentlichen parallel zueinander versetzen Aufnahmeflächen fortgesetzt, bis eine dritte Position erreicht ist, in der sich die erste und die zweite Teilportion zumindest teilweise überlappen.

Beispielsweise kann vorgesehen sein, dass die Aufnahmeflächen bereits vor Beginn der Aufnahmebewegungen im Wesentlichen parallel versetzt zueinander angeordnet sind, insbesondere wobei der Versatz zumindest einer Höhe oder Dicke der zweiten Teilportion entspricht. Dies kann insbesondere dadurch erreicht werden, dass die Aufnehmer unterschiedlich dick ausgeführt sind. Es ist aber auch möglich, "einfedernde" Aufnehmer vorzusehen. Diese können Abschnitte aufweisen, die bei einem Aufsetzen auf eine die Teilportionen tragende Unterlage unter Komprimierung eines elastischen Mittels eingefahren werden. Beim Abheben des entsprechenden Aufnehmers von der Unterlage expandieren diese Abschnitte wieder. Sind diese Abschnitte bei den Aufnehmern unterschiedlich ausgestaltet, so kann auf einfache Weise ein wohldefinierter vertikaler Versatz zwischen deren Aufnahmeflächen erzielt werden. Gleiches ist möglich, wenn lediglich einer der Aufnehmer als ein "einfedernder" Aufnehmer ausgeführt ist.

Es ist also denkbar, dass die erste Aufnahmefläche nach der Aufnahme der ersten Teilportion in einer Richtung im Wesentlichen senkrecht zu der ersten und/oder zweiten Aufnahmefläche um eine Strecke bewegt wird, insbesondere angehoben oder abgesenkt wird. Diese Bewegung kann aktiv oder - wie vorstehend beschrieben - passiv erzeugt werden. Die Strecke entspricht zweckmäßigerweise zumindest einer Höhe oder Dicke der zweiten Teilportion. Es ist aber auch möglich, beide Aufnahmeflächen gegensinnig zu bewegen, um einen Gesamtversatz zumindest in der Größenordnung der Dicke der zweiten Teilportion zu erhalten.

Gemäß einer Variante des Verfahrens wird die erste Aufnahmefläche nach dem Erreichen der dritten Position abgesenkt, insbesondere bis die erste Teilportion teilweise überlappend auf der zweiten Teilportion zu liegen kommt. Diese Variante kommt insbesondere dann zum Einsatz, wenn der Versatz zwischen den Aufnahmeflächen zur Erzeugung der Überlappungssituation größer war als die Dicke der zweiten Teilportion.

Eine Relativbewegung zwischen der ersten und/oder der zweiten Teilportion und der entsprechenden Aufnahmefläche bei der Aufnahmebewegung kann durch einen zugeordneten Seitenanschlag begrenzt werden, insbesondere derart, dass ein Abschnitt der entsprechenden Teilportion über einen der anderen Teilportion zugewandten Rand der jeweiligen Aufnahmefläche ragt. Dieses "über-den-Randragen" vereinfacht die Herstellung der Überlappung der beiden Teilportionen.

Die beiden Aufnehmer können zeitlich versetzt, synchron oder nacheinander von der ersten in die zweite Position bewegt werden. An dieser Stelle sei erwähnt, dass die Bewegungen der Aufnehmer sowie aller diesen erfindungsgemäß zugeordneten Hilfsmittel mit den bekannten mechanischen, elektrischen und/oder pneumatischen Antriebsmitteln umgesetzt werden können.

Insbesondere sind die Teilportionen vor der Bewegung der Aufnehmer nebeneinander angeordnet.

Gemäß einer weiteren Ausführungsform des Verfahrens ist vorgesehen, dass das Produkt vor oder nach dem Erreichen der dritten Position, oder nachdem die erste Teilportion teilweise überlappend auf der zweiten Teilportion zu liegen kommt, durch eine Translation und/oder Rotation des Produktgreifers bewegt und anschließend wieder abgelegt wird, insbesondere in einer Verpackung.

Bei der Ablage des Produkts an dem vorgesehenen Ort können die Aufnehmer synchron, zeitlich versetzt oder nacheinander in eine Öffnungsbewegung versetzt werden.

Grundsätzlich kann ein Niederhalter vorgesehen sein, mittels dem die Teilportionen separat voneinander und/oder gemeinsam mit einer Kraft beaufschlagt werden, um diese gegen eine Unterlage und/oder gegen die jeweilige Aufnahmefläche zu drücken. Die Teilportionen können zeitlich variabel und/oder lokal mit einer Kraft beaufschlagt werden.

Insbesondere ist dem ersten und/oder dem zweiten Aufnehmer ein Seitenanschlag zugeordnet, wobei der Seitenanschlag und die entsprechende Aufnahmefläche zueinander bewegt werden, um die Lage der entsprechenden Teilportion zu beeinflussen. Beispielsweise werden die Seitenanschläge bei der Ablage des Produkts an dem gewünschten Ort, insbesondere in einer Verpackung, in einer fixierten Lage gehalten und die Aufnehmer unter den entsprechenden Teilportionen weggezogen. Die Seitenanschläge wirken dann als eine Art Zentrierung, um das Produkt in der geforderten Lage zu halten. Ein Verrutschen der Teilportionen bei der Seitwärtsbewegung der Aufnehmer wird dadurch verhindert.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1a bis 1d: eine erste Ausführungsform der Erfindung,
- Fig. 2a bis 2e: eine zweite Ausführungsform der Erfindung,
- Fig. 3a bis 3c: eine dritte Ausführungsform der Erfindung und
- Fig. 4a bis 4c: eine vierte Ausführungsform der Erfindung.

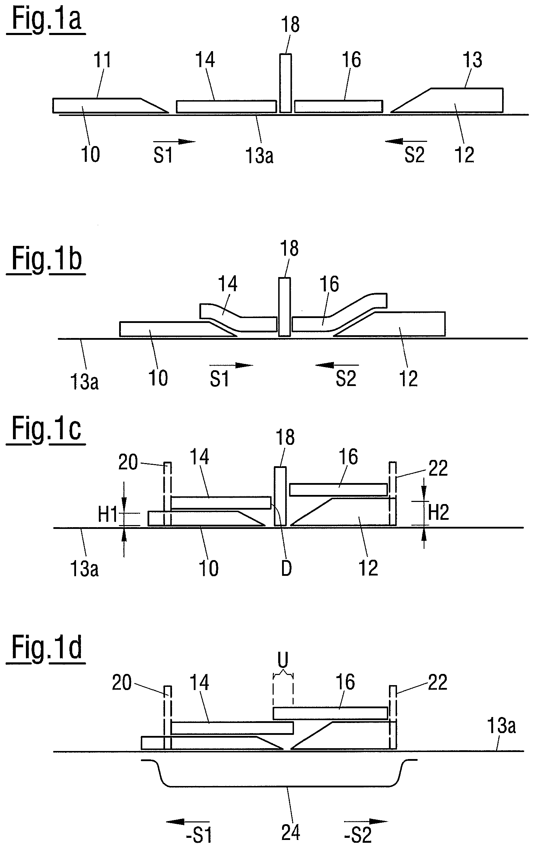

Figur 1a zeigt einen nicht näher dargestellten Produktgreifer mit schaufelartig ausgebildeten Aufnehmern 10,12 mit Aufnahmeflächen 11,13 zur Aufnahme von Teilportionen 14,16 eines Lebensmittelprodukts. Die beiden Aufnehmer 10,12 sind jeweils seitlich der Teilportionen 14,16 angeordnet, die auf einer Unterlage 13a liegen. Die den Teilportionen 14,16 zugewandten Ränder der Aufnehmer 10,12 sind keilförmig ausgebildet. Dies ermöglicht es, die Aufnehmer 10,12 durch Seitwärtsbewegungen S1, S2 der Aufnehmer 10,12 unter die Teilportionen 14,16 und auf die Flächen 11,13 zu schieben.

Um zu verhindern, dass die Teilportionen 14,16 bei diesem Vorgang in unkontrollierter Weise verrutschen, ist ein Zentralanschlag 18 vorgesehen. An diesem können sich die Teilportionen 14,16 während des Aufnahmeprozesses seitlich abstützen.

Figur 1b zeigt einen Zustand, in dem die Aufnehmer 10,12 bereits teilweise unter die entsprechenden Teilportionen 14,16 geschoben wurden und am Zentralanschlag 18 anliegen. Die Bewegungen S1, S2 der Aufnehmer 10,12 können synchron erfolgen. Es ist aber auch durchaus vorstellbar, einen zeitlichen Versatz zwischen den Bewegungen S1, S2 vorzusehen oder diese nacheinander auszuführen.

Um eine genau definierte Lage der Teilportionen 14,16 auf den entsprechenden Aufnehmern 10,12 sicherzustellen, sind gestrichelt dargestellte Seitenanschläge 20,22 vorgesehen (Figur 1c). Die Seitenanschläge 20,22 wurden aus Gründen der Übersichtlichkeit in den Figuren 1a und 1b nicht dargestellt.

Der Seitenanschlag 22 ist dabei so positioniert, dass der der Teilportion 14 zugewandte Rand der Teilportion 16 seitlich über den Aufnehmer 12 übersteht.

In Figur 1c ist die Aufnahme der Teilportionen 14,16 im Wesentlichen abgeschlossen. Der Zentralanschlag 18 wird nun entfernt. Es versteht sich, dass der Zentralanschlag 18 nur optional vorgesehen ist. Insbesondere bei vergleichsweise dicken und/oder auf der Unterlage 13a vergleichsweise stark anhaftenden Teilportionen 14,16 kann eine gegenseitige seitliche Abstützung der Teilportionen 14,16 beim Aufnahmeprozess vorgesehen sein. In vielen Fällen ist daher auch eine seitliche Abstützung der Teilportionen 14,16 in einer Richtung gegen die Seitwärtsbewegungen S1, S2 überhaupt nicht erforderlich.

Anhand von Figur 1c wird deutlich, dass die Teilportionen 14,16 nach dem Abschluss des Aufnahmeprozesses parallel versetzt angeordnet sind. Dies wird durch unterschiedliche Höhen oder Dicken H1, H2 der Aufnehmer 10,12 und den daraus resultierenden Versatz der entsprechenden Auflageflächen 11,13 bewirkt. Die Höhe H2 des Aufnehmers 12 ist dabei zumindest um den Betrag einer Dicke D der Teilportion 14 größer als die Höhe H1 des Aufnehmers 10. Wie in Figur 1d zu erkennen ist, kann dadurch ein Randabschnitt der Teilportionen 14 unter den ihr zugewandten Rand der Teilportionen 16 geschoben werden, wenn die Seitwärtsbewegungen S1, S2 fortgesetzt werden. Dadurch wird eine teilweise überlappende Anordnung (Überlappung U) der Teilportionen 14,16 erzeugt. Es versteht sich, dass die Überlappung auch nur durch eine der Seitwärtsbewegungen S1, S2 erzeugt werden kann.

Mit anderen Worten wird durch eine unterschiedliche Ausgestaltung der Aufnehmer 10,12 ein hinreichend großer paralleler Versatz der Aufnahmeflächen 11,13 bereitgestellt, der die vorstehend beschriebene Vorgehensweise zur Herstellung einer teilweisen Überlappung der Teilportionen 14,16 zulässt.

Der seitliche Überstand der Teilportion 16 ermöglicht es, den Aufnehmer 10 weit genug nach rechts bewegen zu können, um die Teilportionen 14 unter dem Rand der Teilportionen 16 zu positionieren. Ansonsten würden die Aufnehmer 10,12 kollidieren.

Somit wurde aufgrund der unterschiedlichen Ausgestaltung der Aufnehmer 10,12 nur durch die Aufnahme der Teilportionen 14,16 die teilweise Überlappung U bewirkt, die herkömmlicherweise nur mit erheblichem apparativen Aufwand und/oder mit zusätzlichen Verfahrensschritten erzeugt werden kann.

Die Teilportionen 14,16 können in dem in Figur 1d gezeigten Zustand an einen anderen Ort transportiert und beispielsweise in einer Verpackung 24 abgelegt werden. Bei der dargestellten Ausführungsform der vorliegenden Erfindung werden die Seitenanschläge 20,22 in ihrer Position festgehalten, während sich die Aufnehmer 10,12 wieder auseinander bewegen (Seitwärtsbewegungen -S1, -S2). Dabei stützen sich die Teilportionen 14,16 seitlich an den Seitenanschlägen 20,22 ab, so dass sie trotz möglicherweise auftretender Anhaftungen ihre Lage nicht ändern. Nachdem die Aufnehmer 10,12 entfernt wurden, ist das Produkt exakt positioniert in der Verpackung 24 abgelegt.

Es versteht sich, dass die Beträge der Seitwärtsbewegungen S1, S2 unterschiedlich groß sein können, um dem jeweils vorliegenden Anwendungsfall Rechnung tragen zu können.

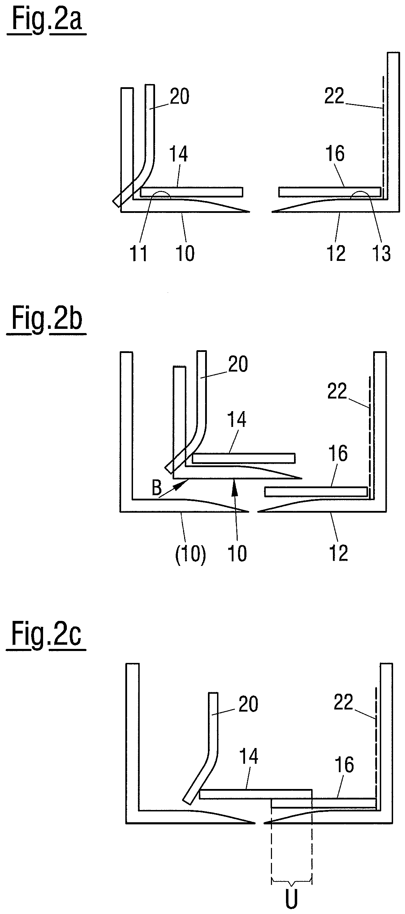

Die Figuren 2a bis 2e zeigen eine weitere Ausführungsform der Erfindung. Die Teilportionen 14,16 sind in Figur 2a bereits auf den entsprechenden Aufnehmern 10,12 angeordnet. Die Aufnehmer 10,12 haben im Wesentlichen die gleiche Höhe oder Dicke, so dass sich die Teilportionen 14,16 in dem gezeigten Zustand in etwa in der gleichen Ebene befinden. Deren korrekte Lage auf den jeweiligen Aufnahmeflächen 11,13 wird dabei wiederum durch Seitenanschläge 20,22 sichergestellt.

Zur Erzeugung der überlappenden Anordnung der Teilportionen 14,16 wird der Aufnehmer 10 mit einer Bewegung B (Pfeil) in eine Position oberhalb der Teilportion 16 gebracht (die ursprüngliche Position des Aufnehmers 10 wird durch das Bezugszeichen (10) gekennzeichnet), wie in Figur 2b zu sehen ist.

Anschließend legt der Aufnehmer 10 die Teilportionen 14 durch eine Seitwärtsbewegung und eine anschließende Vertikalbewegung überlappend auf der Teilportionen 16 ab. Er wird also teilweise wieder zurückgezogen. Der Seitenanschlag 20 verhindert, dass sich die Teilportionen 14 dabei nach links verschiebt (Figur 2c). Der Greifer kann nun bewegt werden, um das Produkt zu dem gewünschten Ablageort zu bringen.

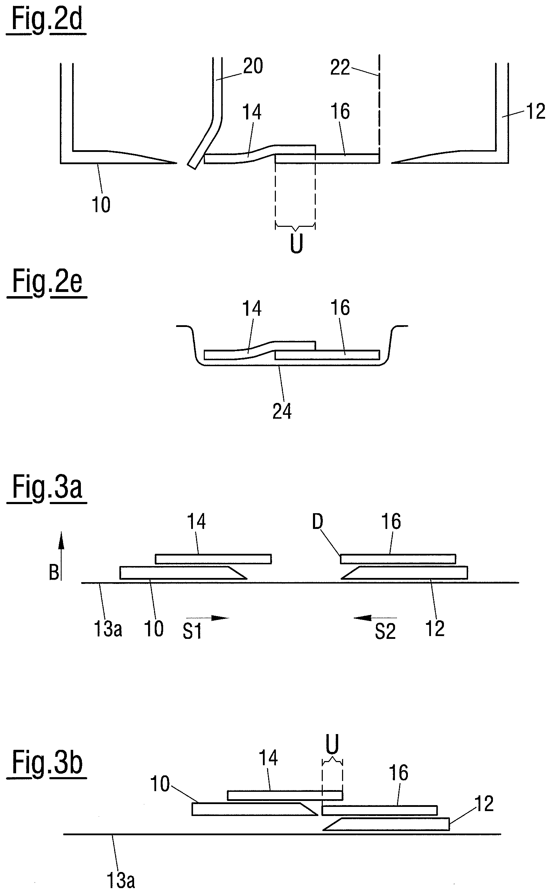

Zur Ablage des Produkts werden die Aufnehmer 10,12 seitlich unter den Teilportionen 14,16 vollständig herausgezogen, die während diesem Prozess gegen seitliche Bewegungen durch die Seitenanschläge 20,22 gesichert sind (Figur 2d). Dann ist der Ablageprozess beendet und das Lebensmittelprodukt wurde mit in gewünschter Weise überlappenden Teilportionen 14,16 in der Verpackung 24 abgelegt (Figur 2e).

Die Figuren 3a und 3b zeigen eine Variation der vorstehend anhand der Figuren 2a bis 2e beschriebenen Ausführungsformen der Erfindung. Anstatt der in Figur 2b dargestellten Bewegung des Aufnehmers 10 deutlich über die Oberkante der Teilportionen 16 hinaus, wird der Aufnehmer 10 hier nur so weit angehoben, dass der linke Rand der Teilportion 16 unter dem rechten Rand der Teilportion 14 positioniert werden kann (Bewegungskomponente B zur Erzeugung eines Versatzes mit zumindest dem Betrag der Dicke D der Teilportion 16). Natürlich kann auch ein größerer Hub vorgesehen sein.

Ein seitlicher Überstand der Teilportion 14 über den rechten Rand des Aufnehmers 10 erleichtert das Herausziehen des Aufnehmers 10 bei der überlappenden Ablage der Teilportion 14 auf der Teilportion 16.

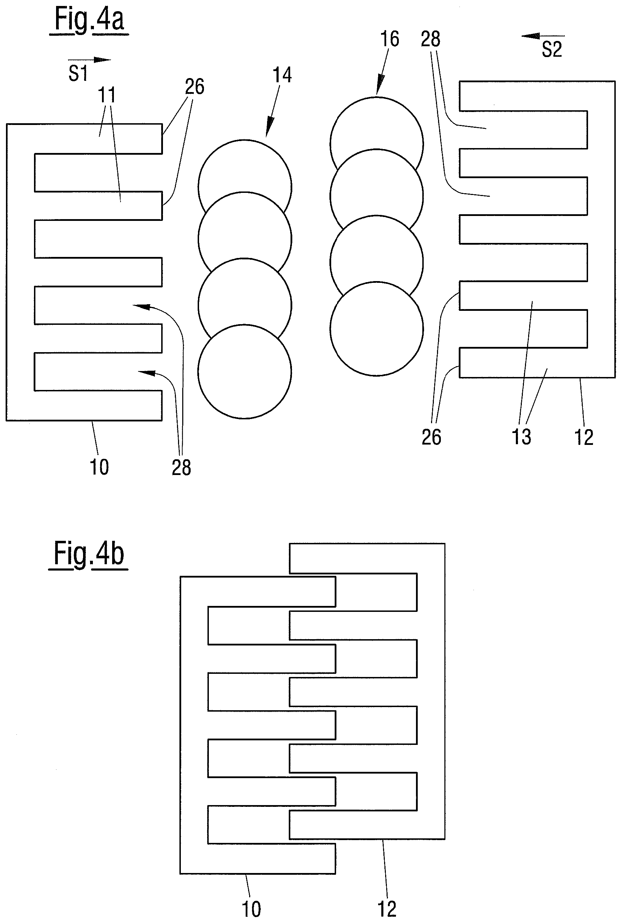

Die Figuren 4a bis 4c zeigen noch eine weitere Ausführungsform der Erfindung. Die Aufnehmer 10,12 sind rechen- oder kammartig ausgebildet. Sie weisen jeweils fingerartige Vorsprünge 26 und zwischen diesen angeordnete Ausnehmungen 28 auf. Die Vorsprünge 26 und die Ausnehmungen 28 der Aufnehmer 10,12 sind dabei versetzt angeordnet, sodass die Aufnehmer 10,12 abschnittsweise ineinandergeschoben werden können (siehe Figur 4b, ohne Teilportionen 14, 16).

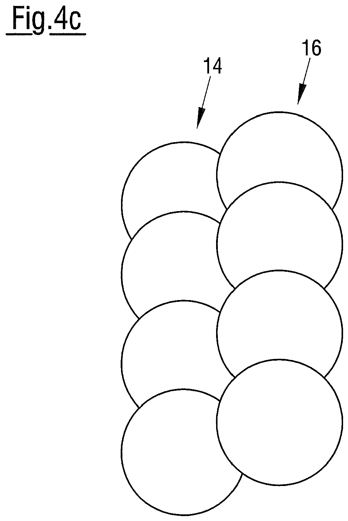

In Figur 4a sind die Teilportionen 14,16 beispielhaft als geschindelt angeordnete Wurstscheiben dargestellt. Durch die Seitwärtsbewegungen S1, S2 der Aufnehmer 10,12 werden die Teilportionen 14,16 auf die Aufnahmeflächen 11,13 der Vorsprünge 26 aufgeschoben. Da die Vorsprünge 26 der Aufnehmer 10 einerseits und der Aufnehmer 12 andererseits unterschiedliche Dicken oder Höhen aufweisen, befinden sich deren Auflageflächen 11,13 in parallel versetzten Ebenen, so dass sich die Teilportionen 14, 16 auf einfache Weise in eine überlappende Anordnung bringen lassen. Diese ist in Figur 4c gezeigt (ohne Aufnehmer 10,12). Es versteht sich, dass sich auch kammartige Aufnehmer 10,12 in Verbindung mit anderen Ausführungsformen der Erfindung nutzen lassen, bei denen ein Versatz der Aufnahmeflächen 11,13 (zusätzlich oder nur) durch ein Anheben / Absenken der Aufnehmer 10 und/oder 12 erzeugt wird.

Bei allen Ausführungsformen der Erfindung kann eine nicht dargestellte Niederhaltervorrichtung vorgesehen sein, um die Teilportionen 14,16 bedarfsweise auf der Unterlage 13a und/oder den Aufnahmeflächen 11,13 zu fixieren. Insbesondere lassen sich die Teilportionen 14,16 separat voneinander, zeitlich variabel und/oder lokal begrenzt mit einer Kraft beaufschlagen, die sie gegen die Unterlage 13a bzw. die Aufnahmeflächen 11,13 presst. Insbesondere sind Abschnitte der Niederhaltervorrichtung unabhängig voneinander beweglich und ansteuerbar. Es kann vorgesehen sein, die Anpresskraft situativ zeitlich und/oder lokal anzupassen, beispielsweise während dem Unterfahren der Teilportionen 14,16 durch die Aufnehmer 10,12 zu variieren. D.h. sie kann in Abhängigkeit eines Schließzustands des Produktgreifers angepasst werden. Während der Bewegung des Produktgreifers von dem Aufnahmeort zu dem Ablageort des Produkts wird dieses vorzugsweise möglichst großflächig gegen die Aufnahmeflächen 10,13 gedrückt, um dessen Lage zu sichern.

Beispielsweise wird bei einer Aufnahme einer der Teilportionen 14,16 die andere Teilportion 16,14 durch die Niederhaltervorrichtung in ihrer Lage fixiert. Die aufzunehmenden Teilportionen 14,16 werden dabei nicht oder nur lokal von der Niederhaltervorrichtung mit einer fixierenden Kraft beaufschlagt, um ihr Unterfahren zu erleichtern.

Zusammenfassend lässt sich ein Grundgedanke der vorliegenden Erfindung unter anderem dadurch charakterisieren, dass die Aufnahmeflächen 11,13 der Aufnehmer 10,12 während der Schließbewegung der Aufnehmer 10,12, die zu Beginn des Aufnahmeprozesses seitlich außerhalb der Teilportionen 14,16 angeordnet sind (d.h. die Teilportionen 14,16 sind zwischen den Aufnehmern 10,12 angeordnet), auf parallel versetzten Ebenen angeordnet sind und/oder parallel versetzt werden. Durch die Schließbewegung wird somit automatisch ermöglicht, dass die-Teilportionen 14,16 überlappend abgelegt werden können.

### Bezugszeichenliste

- 10,12: Aufnehmer
- 11,13: Auflagefläche
- 13a: Unterlage
- 14,16: Teilportion
- 18: Zentralanschlag
- 20,22: Seitenanschlag
- 24: Verpackung
- 26: Vorsprung
- 28: Ausnehmung

- S1, S2: Seitwärtsbewegung
- H1, H2: Höhe
- D: Dicke einer Teilportion
- U: Überlappung
- B: Bewegung

## Patentansprüche

1. Produktgreifer zur Aufnahme eines zumindest eine erste Teilportion (16) und eine zweite Teilportion (14) umfassenden Produkts, umfassend
zumindest einen ersten Aufnehmer (12) mit einer ersten Aufnahmefläche (13) zur Aufnahme der ersten Teilportion (16),
zumindest einen zweiten Aufnehmer (10) mit einer zweiten Aufnahmefläche (11) zur Aufnahme der zweiten Teilportion (14),
ein Antriebsmittel, um die Aufnehmer (10, 12) zwischen einer ersten Position, in welcher die erste Aufnahmefläche (13) und die zweite Aufnahmefläche (11) auf gegenüber liegenden Seiten des aufzunehmenden Produkts angeordnet sind, und einer zweiten Position zu bewegen, in welcher sich die Aufnahmeflächen (11, 13) zumindest teilweise unter den Teilportionen (14, 16) befinden,
wobei der erste Aufnehmer (12) derart ausgestaltet ist, dass die erste Aufnahmefläche (13) mit der ersten Teilportion (16) im Wesentlichen senkrecht relativ zu der zweiten Aufnahmefläche (11) bewegbar, insbesondere anhebbar und/oder absenkbar ist und/oder in dieser Richtung versetzt zu der zweiten Aufnahmefläche (11) angeordnet ist,
**dadurch gekennzeichnet, dass**
die die Aufnahmeflächen (11, 13) aufweisenden Abschnitte der Aufnehmer (10, 12) unterschiedlich dick ausgeführt sind und/oder dass das Antriebsmittel derart ausgestaltet ist, dass die erste Aufnahmefläche (13) in einer Richtung im Wesentlichen senkrecht zu der ersten Aufnahmefläche (13) um eine Strecke bewegbar ist, insbesondere wobei die Strecke zumindest einer Höhe oder Dicke der zweiten Teilportion (14) entspricht.

2. Produktgreifer nach Anspruch 1,
**dadurch gekennzeichnet, dass** ein Versatz in dieser Richtung zwischen der ersten und der zweiten Aufnahmefläche (11, 13), zumindest einer Höhe oder Dicke der zweiten Teilportion entspricht.

3. Produktgreifer nach zumindest einem der vorstehenden Ansprüche,
**dadurch gekennzeichnet, dass** die Aufnehmer (10, 12) kamm- oder rechenartig ausgebildet sind, insbesondere wobei Aussparungen (28) und Vorsprünge (26) der beiden Aufnehmer (10, 12) komplementär oder versetzt zueinander angeordnet sind.

4. Produktgreifer nach zumindest einem der vorstehenden Ansprüche,
**dadurch gekennzeichnet, dass** der erste und/oder der zweite Aufnehmer (12, 10) einen Seitenanschlag (22, 20) aufweisen, durch den eine Bewegung der entsprechenden Teilportion (16, 14) relativ zu der Aufnahmefläche (13, 11) begrenzbar und/oder erzeugbar ist, insbesondere wobei der Seitenanschlag (22, 20) und die jeweilige Aufnahmefläche (13, 11) relativ zueinander bewegbar sind.

5. Produktgreifer nach zumindest einem der vorstehenden Ansprüche,
**dadurch gekennzeichnet, dass** ein zentraler Anschlag (18) vorgesehen ist, der zumindest in der ersten Position der Aufnehmer zwischen den beiden Teilportionen (14, 16) anordbar ist, insbesondere wobei der zentrale Anschlag (18) bewegbar ist.

6. Verfahren zur Aufnahme eines zumindest eine erste Teilportion (16) und eine zweite Teilportion (14) umfassenden Produkts mittels eines Produktgreifers gemäß zumindest einem der vorstehenden Ansprüche, wobei der Produktgreifer zumindest einen ersten Aufnehmer (12) mit einer ersten Aufnahmefläche (13) zur Aufnahme der ersten Teilportion (16) und zumindest einen zweiten Aufnehmer (10) mit einer zweiten Aufnahmefläche (11) zur Aufnahme der zweiten Teilportion (14) umfasst, in den Schritten:
- Bewegung des ersten Aufnehmers (12) zur Aufnahme der ersten Teilportion (16) aus einer Grundposition, in welcher die erste Aufnahmefläche (13) seitlich versetzt zu der aufzunehmenden ersten Teilportion (16) angeordnet ist, in eine zweite Position, in welcher sich die erste Aufnahmefläche (13) zumindest teilweise unter der ersten Teilportion (16) befindet,
- Bewegung des zweiten Aufnehmers (10) zur Aufnahme der zweiten Teilportion (14) aus einer Grundposition, in welcher die zweite Aufnahmefläche (11) seitlich versetzt zu der aufzunehmenden zweiten Teilportion (14) angeordnet ist, in eine zweite Position, in welcher sich die zweite Aufnahmefläche (11) zumindest teilweise unter der zweiten Teilportion (14) befindet,
wobei die Bewegung des ersten und/oder des zweiten Aufnehmers (12, 10) nach der Aufnahme der jeweiligen Teilportionen (16, 14) bei mit im Wesentlichen parallel zueinander versetzen Aufnahmeflächen (13, 11) fortgesetzt wird, bis eine dritte Position erreicht ist, in der sich die erste und die zweite Teilportion (16, 14) zumindest teilweise überlappen.

7. Verfahren nach Anspruch 6,
**dadurch gekennzeichnet, dass** die Aufnahmeflächen (11, 13) bereits vor Beginn der Aufnahmebewegungen im Wesentlichen parallel versetzt zueinander angeordnet sind, insbesondere wobei der Versatz zumindest einer Höhe oder Dicke der zweiten Teilportion (14) entspricht.

8. Verfahren nach Anspruch 6 oder 7,
**dadurch gekennzeichnet, dass** die erste Aufnahmefläche (13) nach der Aufnahme der ersten Teilportion (16) in einer Richtung im Wesentlichen senkrecht zu der ersten Aufnahmefläche (13) um eine Strecke bewegt, insbesondere angehoben wird, die zumindest einer Höhe oder Dicke der zweiten Teilportion (14) entspricht, insbesondere wobei die erste Aufnahmefläche (13) nach dem Erreichen der dritten Position abgesenkt wird, insbesondere bis die erste Teilportion (16) teilweise überlappend auf der zweiten Teilportion (14) zu liegen kommt.

9. Verfahren nach zumindest einem der Ansprüche 6 bis 8,
**dadurch gekennzeichnet, dass** eine Relativbewegung zwischen der ersten und/oder der zweiten Teilportion (16, 14) und der entsprechenden Aufnahmefläche (13, 11) bei der Aufnahmebewegung durch einen zugeordneten Seitenanschlag (22, 20) begrenzt wird, insbesondere derart, dass ein Abschnitt der entsprechenden Teilportion (16, 14) über einen der anderen Teilportion (14 bzw. 16) zugewandten Rand der jeweiligen Aufnahmefläche (13, 11) ragt.

10. Verfahren nach zumindest einem der Ansprüche 6 bis 9,
**dadurch gekennzeichnet, dass** die beiden Aufnehmer (10, 12) zeitlich versetzt, synchron oder nacheinander von der ersten in die zweite Position bewegt werden.

11. Verfahren nach zumindest einem der Ansprüche 6 bis 10,
**dadurch gekennzeichnet, dass** die Teilportionen (14, 16) vor der Bewegung der Aufnehmer (10, 12) nebeneinander angeordnet sind.

12. Verfahren nach zumindest einem der Ansprüche 6 bis 11,
**dadurch gekennzeichnet, dass** das Produkt vor oder nach dem Erreichen der dritten Position oder nach dem die erste Teilportion (16) teilweise überlappend auf der zweiten Teilportion (14) zu liegen kommt durch eine Translation und/oder Rotation des Produktgreifers bewegt und anschließend wieder abgelegt wird, insbesondere in einer Verpackung, insbesondere wobei die Aufnehmer (12, 10) bei der Ablage des Produkts synchron, zeitlich versetzt oder nacheinander in eine Öffnungsbewegung versetzt werden.

13. Verfahren nach zumindest einem der Ansprüche 6 bis 12,
**dadurch gekennzeichnet, dass** dem ersten und/oder dem zweiten Aufnehmer (12, 10) ein Seitenanschlag (22, 20) zugeordnet ist, wobei der Seitenanschlag (22, 20) und die entsprechende Aufnahmefläche (13, 11) zueinander bewegt werden, um die Lage der entsprechenden Teilportion (16, 14) zu beeinflussen, insbesondere bei einer Öffnungsbewegung der Aufnehmer (12, 10) und beim Ablegen des Produkts.

## Claims

1. A product gripper for picking up a product comprising at least a first part portion (16) and a second part portion (14), said product gripper comprising
at least a first pick-up element (12) having a first pick-up surface (13) for picking up the first part portion (16),
at least a second pick-up element (10) having a second pick-up surface (11) for picking up the second part portion (14),
a drive means to move the pick-up elements (10, 12) between a first position, in which the first pick-up surface (13) and the second pick-up surface (11) are arranged on mutually oppositely disposed sides of the product to be picked up, and a second position in which the pick-up surfaces (11, 13) are at least partly located beneath the part portions (14, 16),
wherein the first pick-up element (12) is designed such that the first pick-up surface (13) with the first part portion (16) is movable, in particular raisable and/or lowerable, substantially perpendicular relative to the second pick-up surface (11) and/or is arranged offset from the second pick-up surface (11) in this direction,
**characterized in that**
the sections of the pick-up elements (10, 12) which have the pick-up surfaces (11, 13) are designed with different thicknesses, and/or **in that** the drive means is designed such that the first pick-up surface (13) is movable by a distance in a direction substantially perpendicular to the first pick-up surface (13), in particular with the distance corresponding to at least a height or a thickness of the second part portion (14).

2. A product gripper in accordance with claim 1,
**characterized in that**
an offset in this direction between the first and second pick-up surface (11, 13) corresponds to at least a height or a thickness of the second portion.

3. A product gripper in accordance with at least one of the preceding claims, **characterized in that**
the pick-up elements (10, 12) are comb-like or rake-like, in particular with recesses (28) and projections (26) of the two pick-up elements (10, 12) being arranged complementary to or offset from one another.

4. A product gripper in accordance with at least one of the preceding claims, **characterized in that**
the first and/or the second pick-up element (12, 10) has/have a side abutment (22, 20) by which a movement of the corresponding part portion (16, 14) relative to the pick-up surface (13, 11) can be limited and/or can be produced, in particular with the side abutment (22, 20) and the respective pick-up surface (13, 11) being movable relative to one another.

5. A product gripper in accordance with at least one of the preceding claims, **characterized in that**
a central abutment (18) is provided which can be arranged between the two part portions (14, 16) at least in the first position of the pick-up elements, in particular with the central abutment (18) being movable.

6. A method of picking up a product comprising at least a first part portion (16) and a second part portion (14) by means of a product gripper in accordance with least one of the preceding claims, wherein the product gripper comprises at least a first pick-up element (12) having a first pick-up surface (13) for picking up the first part portion (16) and at least a second pick-up element (10) having a second pick-up surface (11) for picking up the second part portion (14), in the steps:
- moving the first pick-up element (12) for picking up the first part portion (16) from a base position, in which the first pick-up surface (13) is arranged laterally offset from the first part portion (16) to be picked up, into a second position in which the first pick-up surface (13) is located at least partly beneath the first part portion (16),
- moving the second pick-up element (10) for picking up the second part portion (14) from a base position, in which the second pick-up surface (11) is arranged laterally offset from the second part portion (14) to be picked up, into a second position in which the second pick-up surface (11) is located at least partly beneath the second part portion (14),
wherein the movement of the first and/or the second pick-up element (12, 10) is continued after the picking up of the respective part portions (16, 14) with the pick-up surfaces (13, 11) offset substantially in parallel from one another until a third position is reached in which the first and second part portions (16, 14) at least partly overlap.

7. A method in accordance with claim 6,
**characterized in that**
the pick-up surfaces (11, 13) are already arranged substantially offset in parallel from one another before the start of the pick-up movements, in particular with the offset corresponding to at least a height or a thickness of the second part portion (14).

8. A method in accordance with claim 6 or claim 7,
**characterized in that**,
after the picking up of the first part portion (16), the first pick-up surface (13) is moved, in particular raised, in a direction substantially perpendicular to the first pick-up surface (13) by a distance which corresponds to at least a height or a thickness of the second part portion (14), in particular with the first pick-up surface (13) being lowered after reaching the third position, in particular until the first part portion (16) comes to lie partly overlapping on the second part portion (14).

9. A method in accordance with at least one of the claims 6 to 8, **characterized in that**
a relative movement between the first and/or the second part portion (16, 14) and the corresponding pick-up surface (13, 11) is limited by an associated side abutment (22, 20) on the pick-up movement, in particular such that a section of the corresponding part portion (16, 14) projects over a margin of the respective pick-up surface (13, 11) facing the other part portion (14 or 16).

10. A method in accordance with at least one of the claims 6 to 9, **characterized in that**
the two pick-up elements (10, 12) are moved offset in time, synchronously or successively from the first position into the second position.

11. A method in accordance with at least one of the claims 6 to 10, **characterized in that**
the part portions (14, 16) are arranged next to one another before the movement of the pick-up elements (10, 12).

12. A method in accordance with at least one of the claims 6 to 11, **characterized in that**
the product, before or after reaching the third position or after the first part portion (16) has come to lie partly overlapping on the second part portion (14), is moved by a translation and/or rotation of the product gripper and is subsequently placed again, in particular in a package, in particular with the pick-up elements (12, 10) being set into an opening movement synchronously, offset in time or successively on the placement of the product.

13. A method in accordance with at least one of the claims 6 to 12, **characterized in that**
a side abutment (22, 20) is associated with the first and/or the second pick-up element (12, 10), with the side abutment (22, 20) and the corresponding pick-up surface (13, 11) being moved toward one another to influence the position of the corresponding part portion (16, 14), in particular on an opening movement of the pick-up elements (12, 10) and on a placement of the product.

## Revendications

1. Dispositif de préhension de produit pour recevoir un produit comprenant au moins une première portion partielle (16) et une deuxième portion partielle (14), comprenant
au moins un premier récepteur (12) ayant une première surface de réception (13) pour recevoir la première portion partielle (16),
au moins un deuxième récepteur (10) ayant une deuxième surface de réception (11) pour recevoir la deuxième portion partielle (14),
un moyen d'entraînement pour déplacer les récepteurs (10, 12) entre une première position, dans laquelle la première surface de réception (13) et la deuxième surface de réception (11) sont disposées sur des côtés opposés du produit à recevoir, et une deuxième position, dans laquelle les surfaces de réception (11, 13) se trouvent au moins partiellement sous les portions partielles (14, 16),
le premier récepteur (12) étant conçu de telle sorte que la première surface de réception (13) avec la première portion partielle (16) peut être déplacée, en particulier être soulevée et/ou abaissée, sensiblement perpendiculairement par rapport à la deuxième surface de réception (11), et/ou est disposée de manière décalée par rapport à la deuxième surface de réception (11) dans ladite direction,
**caractérisé en ce que**
les parties des récepteurs (10, 12) présentant les surfaces de réception (11, 13) sont réalisées avec des épaisseurs différentes, et/ou **en ce que** le moyen d'entraînement est conçu de telle sorte que la première surface de réception (13) peut être déplacée d'un trajet dans une direction sensiblement perpendiculaire à la première surface de réception (13), en particulier le trajet correspondant au moins à une hauteur ou épaisseur de la deuxième portion partielle (14).

2. Dispositif de préhension de produit selon la revendication 1,
**caractérisé en ce que**
un décalage dans ladite direction entre les première et deuxième surfaces de réception (11, 13) correspond au moins à une hauteur ou épaisseur de la deuxième portion partielle.

3. Dispositif de préhension de produit selon l'une des revendications précédentes,
**caractérisé en ce que**
les récepteurs (10, 12) sont réalisés en forme de peigne ou de râteau, en particulier des échancrures (28) et des saillies (26) des deux récepteurs (10, 12) étant disposées de façon complémentaire ou décalée les unes par rapport aux autres.

4. Dispositif de préhension de produit selon l'une au moins des revendications précédentes,
**caractérisé en ce que**
le premier et/ou le deuxième récepteur (12, 10) présentent une butée latérale (22, 20) par laquelle un mouvement de la portion partielle correspondante (16, 14) par rapport à la surface de réception (13, 11) peut être limité et/ou généré, en particulier la butée latérale (22, 20) et la surface de réception respective (13, 11) étant mobiles l'une par rapport à l'autre.

5. Dispositif de préhension de produit selon l'une au moins des revendications précédentes,
**caractérisé en ce que**
il est prévu une butée centrale (18) qui peut être disposée entre les deux portions partielles (14, 16) au moins dans la première position des récepteurs, en particulier la butée centrale (18) étant mobile.

6. Procédé pour recevoir un produit, comprenant au moins une première portion partielle (16) et une deuxième portion partielle (14), au moyen d'un dispositif de préhension de produit selon l'une au moins des revendications précédentes, le dispositif de préhension de produit comprenant au moins un premier récepteur (12) ayant une première surface de réception (13) pour recevoir la première portion partielle (16) et au moins un deuxième récepteur (10) ayant une deuxième surface de réception (11) pour recevoir la deuxième portion partielle (14), comprenant les étapes consistant à :
- déplacer le premier récepteur (12) destiné à recevoir la première portion partielle (16) d'une position de base, dans laquelle la première surface de réception (13) est disposée de façon décalée latéralement par rapport à la première portion partielle (16) à recevoir, jusque dans une deuxième position, dans laquelle la première surface de réception (13) se trouve au moins partiellement sous la première portion partielle (16),
- déplacer le deuxième récepteur (10) destiné à recevoir la deuxième portion partielle (14) d'une position de base, dans laquelle la deuxième surface de réception (11) est disposée de façon décalée latéralement par rapport à la deuxième portion partielle (14) à recevoir, jusque dans une deuxième position, dans laquelle la deuxième surface de réception (11) se trouve au moins partiellement sous la deuxième portion partielle (14),
dans lequel, une fois que les portions partielles respectives (16, 14) sont reçues, le mouvement du premier et/ou du deuxième récepteur (12, 10) est poursuivi avec des surfaces de réception (13, 11) décalées sensiblement parallèlement l'une à l'autre, jusqu'à ce qu'une troisième position soit atteinte, dans laquelle les première et deuxième portions partielles (16, 14) se chevauchent au moins partiellement.

7. Procédé selon la revendication 6,
**caractérisé en ce que**
les surfaces de réception (11, 13) sont disposées de façon décalée sensiblement parallèlement l'une à l'autre déjà avant le début des mouvements de réception, en particulier le décalage correspondant au moins à une hauteur ou épaisseur de la deuxième portion partielle (14).

8. Procédé selon la revendication 6 ou 7,
**caractérisé en ce que**
une fois que la première portion partielle (16) est reçue, la première surface de réception (13) est déplacée, en particulier soulevée, dans une direction sensiblement perpendiculaire à la première surface de réception (13) d'un trajet qui correspond au moins à une hauteur ou épaisseur de la deuxième portion partielle (14), en particulier la première surface de réception (13) étant abaissée après avoir atteint la troisième position, en particulier jusqu'à ce que la première portion partielle (16) vienne se poser en chevauchement partiel sur la deuxième portion partielle (14).

9. Procédé selon l'une au moins des revendications 6 à 8,
**caractérisé en ce que**
un mouvement relatif entre la première et/ou la deuxième portion partielle (16, 14) et la surface de réception correspondante (13, 11) est limité par une butée latérale associée (22, 20) lors du mouvement de réception, en particulier de telle sorte qu'une partie de la portion partielle correspondante (16, 14) dépasse au-delà d'un bord de la surface de réception respective (13, 11), qui est tourné vers l'autre portion partielle (14 ou 16).

10. Procédé selon l'une au moins des revendications 6 à 9,
**caractérisé en ce que**
les deux récepteurs (10, 12) sont déplacés de la première à la deuxième position de manière décalée dans le temps, de manière synchrone ou l'un après l'autre.

11. Procédé selon l'une au moins des revendications 6 à 10, **caractérisé en ce que**
avant le mouvement des récepteurs (10, 12), les portions partielles (14, 16) sont disposées l'une à côté de l'autre.

12. Procédé selon l'une au moins des revendications 6 à 11, **caractérisé en ce que**
avant ou après avoir atteint la troisième position ou après que la première portion partielle (16) vient se poser en chevauchement partiel sur la deuxième portion partielle (14), le produit est déplacé par translation et/ou rotation du dispositif de préhension de produit, et ensuite il est déposé, en particulier dans un emballage, en particulier les récepteurs (12, 10) étant animés d'un mouvement d'ouverture de manière synchrone, de manière décalée dans le temps ou l'un après l'autre, lors de la dépose du produit.

13. Procédé selon l'une au moins des revendications 6 à 12, **caractérisé en ce que**
une butée latérale (22, 20) est associée au premier et/ou au deuxième récepteur (12, 10), la butée latérale (22, 20) et la surface de réception correspondante (13, 11) étant déplacées l'une par rapport à l'autre afin d'influencer la position de la portion partielle correspondante (16, 14), en particulier lors d'un mouvement d'ouverture des récepteurs (12, 11) et lors de la dépose du produit.
